**Europäisches Patentamt**

**European Patent Office**

**Office européen des brevets**

(11) Veröffentlichungsnummer: **0 438 723 A2**

## EUROPÄISCHE PATENTANMELDUNG

(21) Anmeldenummer: **90124405.3**

(22) Anmeldetag: **17.12.90**

(51) Int. Cl.⁵: **B60Q 1/26**

(30) Priorität: **18.01.90 DE 9000519 U**

(43) Veröffentlichungstag der Anmeldung:
**31.07.91 Patentblatt 91/31**

(84) Benannte Vertragsstaaten:
**AT DE ES FR GB IT NL**

(71) Anmelder: **Hella KG Hueck & Co.**
**Rixbecker Strasse 75 Postfach 28 40**
**W-4780 Lippstadt(DE)**

(72) Erfinder: **Janssen, Dieter**
**Ostdeutscher Ring 4a**
**W-4780 Lippstadt(DE)**

(54) **Fahrzeugleuchte.**

(57) Die Erfindung betrifft eine Fahrzeugleuchte, insbesondere Heckleuchte, deren Gehäuse (1) quaderförmig ausgebildet und von einer lösbar befestigten Lichtscheibe (2) abgedeckt ist. Die Leuchte weist auf seiner der Lichtaustrittsfläche gegenüberliegenden Rückseite (7) des Gehäuses (1) Vorkehrungen zu seiner Befestigung am Fahrzeug auf. In der Rückseite (7) des Gehäuses (1) sind zwei im Abstand zueinander angeordnete taschenförmige Einstülpungen (8) eingebracht, die sich über die gesamte Höhe der lichten Weite des Gehäuses (1) erstrecken. In die Wandungsteile der taschenförmigen Einstülpungen (8), welche einen Teil der Außenwandung (11) bilden, sind zumindest in einer der Außenwände öffnungen (9) eingebracht.

## FIG 1

## FAHRZEUGLEUCHTE

Die Erfindung bezieht sich auf eine Fahrzeugleuchte, insbesondere Heckleuchte, mit einem quaderförmig ausgebildeten Gehäuse, welches von einer lösbar befestigten Lichtscheibe abgedeckt ist, und mit einer der Lichtaustrittsfläche gegenüberliegenden Rückseite des Gehäuses, welche Vorkehrungen zu ihrer Befestigung am Fahrzeug aufweist.

Eine Leuchte dieser Art ist bereits aus dem DE-GM 79 08 036 bekannt. Jedoch läßt diese Leuchte nur ihre Befestigung in einer bevorzugten Anbaulage zu, die lediglich der Neigung der Karosserie am Anbauort der Leuchte Rechnung trägt. Außerdem macht die Montage der Leuchte eine Öffnung des Leuchtengehäuses erforderlich, was einmal einen unnötigen Aufwand für die Montage bedeutet und zum anderen die Gefahr einer Undichtigkeit der Leuchte im Bereich der in das Gehäuseinnere reichenden Befestigungsmittel mit sich bringt.

Aufgabe der Erfindung ist es, das Gehäuse einer Heckleuchte mit vorgegebener Abstrahlrichtung so auszubilden, daß es ohne zusätzliche Bauteile, wie Sockel oder Halter nachträglich in senkrechter oder waagerechter Anbaulage ohne die Leuchte öffnen zu müssen und ohne in das Gehäuseinnere reichende Befestigungsöffnungen einbringen zu müssen, an die Karosserie anbringbar ist. Diese Aufgabe wird erfindungsgemäß dadurch gelöst, daß

- in der Rückseite des Gehäuses zwei im Abstand zueinander angeordnete taschenförmige Einstülpungen eingebracht sind, die sich über die gesamte Höhe der lichten Weite des Gehäuses erstrecken und daß in die Wandungsteile der taschenförmigen Einstülpungen, welche einen Teil der Außenwandung bilden, zumindest in einer der Außenwände Öffnungen eingebracht sind.

Bei einer weiteren zweckmäßigen Ausgestaltung der Erfindung sind in die Wandungsteile der taschenförmigen Einstülpungen in beide Außenwände fluchtende Öffnungen eingebracht. Dies ermöglicht die Verwendung langer, durchführender und damit einen festeren Sitz der Leuchte bewirkender Schraubenbolzen. Außerdem besteht durch das Freiliegen des Bolzenkopfs auf dem Gehäuse die Möglichkeit, durch Drehen am Bolzenkopf die Verspannung mit der Karosserie zu erzeugen.

Weiterhin ist es vorteilhaft, daß die taschenförmigen Einstülpungen jeweils eine Ausbuchtung aufweisen, die zu dem für die Lichtscheibenbefestigung vorgesehenen Gewinde fluchtet. Diese Einstülpungen sind werkzeugtechnisch notwendig und verhindern im Bereich der taschenförmigen Einstülpungen Einfallstellen und damit unterschiedliche Wandstärken.

Die Zeichnung veranschaulicht ein vorteilhaftes Ausführungsbeispiel der Erfindung und zwar zeigen

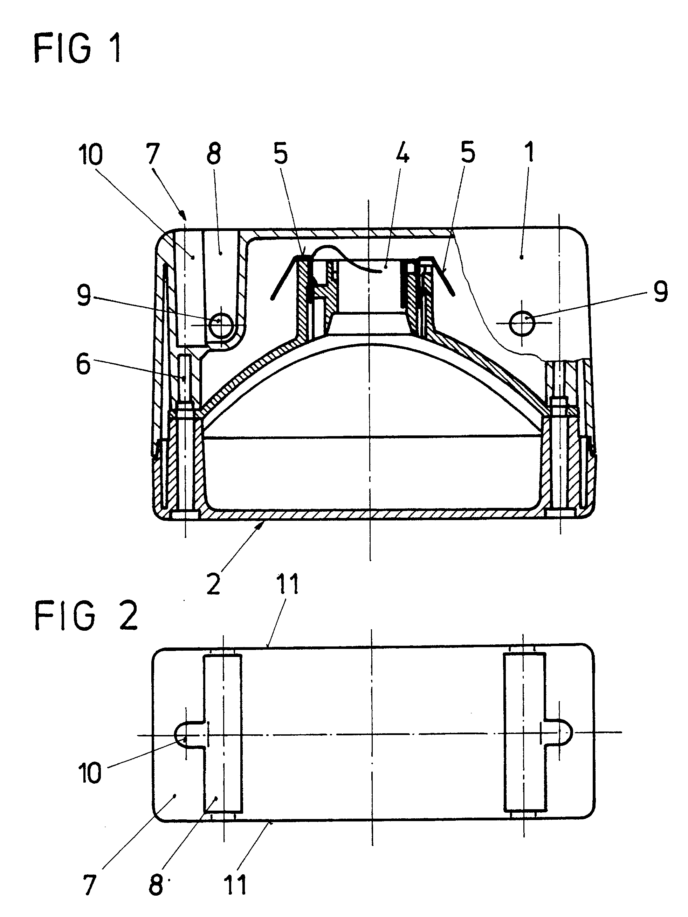

Figur 1 ein zu den Anbauflächen parallel verlaufender Mittelschnitt,

Figur 2 eine Rückansicht der Leuchte.

In einem Leuchtengehäuse (1), das mit einer lösbar befestigten Lichtscheibe (2) abgedeckt ist, befindet sich ein lösbar befestigter Reflektor (3). Im Reflektor (3) ist eine Lampenfassung (4) mit Kontakten (5) angeordnet. Die Lichtscheibe (2) und der Reflektor (3) wird über Schrauben in Gewindebohrlöchern (6) gehalten. An der Rückseite (7) des Gehäuses (1) befinden sich taschenförmige Einstülpungen (8), mit in den Außenwandungen (11) befindlichen, fluchtenden Öffnungen (9). Im Bereich der taschenförmigen Einstülpungen (8) sind Ausbuchtungen (10) eingeformt, die zu den Gewindebohrlöchern (6) der Lichtscheibenbefestigung fluchten.

Bei horizontaler Anbaulage kann die Leuchte mit einer der Außenwandungen (11) an einer ebenso verlaufenden Karosseriefläche mit Hilfe der durch die Öffnungen (9) hindurchragenden Gewindebolzen verschraubt werden. Bei senkrechter Anbaulage verläuft die Karosseriefläche vertikal und somit verläuft die Außenwandung (11) ebenfalls bei der Anbringung vertikal. Auch besteht die Möglichkeit nicht nur Befestigungsbolzen zu verwenden, die durch die beiden Öffnungen (9) hindurchgehen, sondern kürzere, die in die taschenförmige Einstülpung (8) eingelegt und nur durch eine Gehäusewandung (11) hindurchgesteckt werden. Eine Öffnung zur Kabeldurchführung ist mit einer Gummidichtung versehen, aber nicht dargestellt.

**Patentansprüche**

1. Fahrzeugleuchte, insbesondere Heckleuchte mit folgenden Merkmalen:

    a) das Gehäuse ist quaderförmig ausgebildet,

    b) das Gehäuse ist von einer lösbar befestigten Lichtscheibe abgedeckt,

    c) die Leuchte weist auf seiner der Lichtaustrittsfläche gegenüberliegenden Rückseite des Gehäuses Vorkehrungen zu seiner Befestigung am Fahrzeug auf,

    dadurch gekennzeichnet, daß

    d) in der Rückseite (7) des Gehäuses (1) zwei im Abstand zueinander angeordnete, taschenförmige Einstülpungen (8) eingebracht sind, die sich über die gesamte Höhe der lichten Weite des Gehäuses erstrecken und daß in die Wandungsteile der taschenförmigen Einstülpungen (8), welche einen Teil der Außenwandung (11) bilden, zumindest in einer der Außenwände Öffnungen (9) eingebracht sind.

2. Fahrzeugleuchte, nach Anspruch 1, dadurch gekennzeichnet, daß in die Wandungsteile der taschenförmigen Einstülpungen (8) in beide Außenwände (11) fluchtende Öffnungen (9) eingebracht sind.

3. Fahrzeugleuchte nach Anspruch 1 oder 2, dadurch gekennzeichnet, daß die taschenförmigen Einstülpungen (8) je eine Ausbuchtung (10) aufweisen, die zu dem für die Lichtscheibenbefestigung vorgesehenen Gewindebohrloch (6) fluchtet.

## FIG 1

## FIG 2